# EUROPÄISCHE PATENTSCHRIFT

(11) **EP 0 855 523 B1**
(45) Veröffentlichungstag und Bekanntmachung des Hinweises auf die Patenterteilung: **04.12.2002**
(21) Anmeldenummer: 98100419.5
(22) Anmeldetag: 13.01.1998
(51) Int. Cl.: F16B 5/06

(54) **Klammersystem zur Befestigung eines Anbauteils an einem Trägerteil**
Clamping system for fixing an extension part on a supporting part
Système de serrage pour la fixation d'une pièce de montage sur un support

(30) Priorität: 24.01.1997 DE 19702429
(43) Veröffentlichungstag der Anmeldung: 29.07.1998
(73) Patentinhaber: A. Raymond & Cie, F-38028 Grenoble-Cédex (FR)
(72) Erfinder: Motsch, Uwe, 79618 Rheinfelden (DE)
(74) Vertreter: Kirchgaesser, Johannes, Dipl.-Ing.

(56) Entgegenhaltungen:
- EP-A- 0 018 851
- DE-A- 3 245 056
- US-A- 3 864 789
- US-A- 4 865 505
- US-A- 5 542 158

## Beschreibung

Die Erfindung bezieht sich auf ein Klammersystem zur Befestigung eines Anbauteils an einem Trägerteil, bestehend aus einer Verbindungsklammer aus federndem Material, die im unmontierten Zustand zwei von einem Mittelsteg aus aufeinander zugebogene Federschenkel aufweist, einem Anbauteil und einem Trägerteil mit einer Öffnung, wobei die Verbindungsklammer an einem Fortsatz des Anbauteils festklemmbar und in eine vorzugsweise schlitzförmige Öffnung des Trägerteils einsteckbar ist und sich dabei derart federnd verformt, daß sie an den Kanten dieser Öffnung mit dem Trägerteil in eine kraftschlüssige Verbindung gelangt.

Durch die gattungsbildende DE 32 45 056 A1 ist eine elastische Klemme aus Federstahl für den genannten Zweck bekannt. Sie weist mehrere, mindestens aber drei Schenkelpaare unterschiedlicher Länge auf, die von einer Mittellinie ausgehend so aufeinander zurückgebogen sind, daß sie in Seitenansicht im wesentlichen die Form eines Rhombus bilden. Die freien Enden der Schenkelpaare kommen im unmontierten Zustand der Klemme an dem einen spitzen Winkel des von ihnen gebildeten Rhombus aneinander zur Anlage und sind danach nochmals winklig abgebogen, wodurch das Aufschieben der Klemme auf einen Fortsatz des Anbauteils erleichtert wird. Indem dabei die freien Enden der Schenkelpaare auseinandergespreizt werden, kommen diese klemmend an den Seitenflächen des Fortsatzes zur Anlage. Um die Halterung der Klemme auf dem Fortsatz zu sichern, sind die beiden äußeren, deutlich kürzeren Schenkelpaare vorgesehen, die in ihrem Anlagebereich an dem Fortsatz zusätzlich nach innen gebogene Krallen aufweisen. Das genaue Anbringen der Klemme soll außerdem durch seitliche Abstützungen an dem Fortsatz unterstützt werden.

Dem eigentlichen Zweck der Klemme, nämlich der Befestigung des Anbauteils an einem Trägerteil, dient oder dienen nur das oder die mittleren, längeren Schenkelpaare. Dazu ist die durch die kurze Diagonale des durch ein mittleres Schenkelpaar gebildeten Rhombus gegebene Weite der Klemme um ein bestimmtes Maß größer als die entsprechende lichte Weite einer schlitzförmigen Öffnung in dem Trägerteil. Zur Befestigung des Anbauteils wird dessen Fortsatz mit der darauf montierten Klemme unter elastischer Verformung des mittleren Schenkelpaares in die schlitzförmige Öffnung des Trägerteils eingeschoben, bis die einander gegenüberliegenden, stumpfwinkligen Bereiche des Schenkelpaares hinter der Innenkante der Öffnung liegen und die Schenkelflächen zurückfedernd an der Innenkante anliegen.

Um einen bestimmten Abstand zwischen dem Anbauteil und dem Trägerteil garantieren zu können, sind am Anbauteil zusätzlich entsprechend dimensionierte Rippen vorgesehen. Zur Verstärkung der Klemmkraft wird vorgeschlagen, mehrere mittlere Schenkelpaare vorzusehen, die sich außerdem speziell für die Befestigung an einem Trägerteil aus Schichtmaterial in ihrer Länge derart unterscheiden können, daß ihre Schenkelflächen an den Innenkanten der jeweils unterschiedlichen Materialschichten federnd anliegen.

Die Ausgestaltung dieser Klemme garantiert keinen wirklich sicheren Sitz auf dem Fortsatz des Anbauteils, da sie dort nur durch die einwärts gerichtete Feder-Andruckkraft der Schenkelpaare gehalten wird. Aus diesem Grund mußten auch die seitlichen kürzeren Schenkelpaare mit ihren Haltenasen zusätzlich vorgesehen werden. Die an dem Anbauteil vorzusehenden Fortsätze, Verstärkungs- und Abstandsrippen erschweren die Herstellung und erfordern besondere Werkzeuge. Zur Anpassung der Klemme an verschiedene Verwendungen sind besondere Maßnahmen notwendig. Die mittleren Schenkelpaare gelangen mit dem Trägerteil lediglich in eine kraftschlüssige Verbindung, die nur geringen Belastungen standhalten kann.

Aufgabe der Erfindung ist es, ein vielseitig verwendbares Klammersystem zur Verbindung von Bauteilen zu schaffen, wobei die Verbindungsklammer selbst vergleichsweise einfach in ihrer Ausgestaltung und Herstellung sein soll und auch die zu verbindenden Bauteile mit den zur Aufnahme und Halterung der Klammer vorzusehenden Teilen einfach und ohne erhöhten Werkzeugaufwand, insbesondere mit möglichst einfachen Funktionen im Spritzgießverfahren, herzustellen sein sollen. Dabei soll mit möglichst einfachen Mitteln ein wirklich sicherer Sitz der Klammer und somit eine sichere Verbindung der Bauteile erreicht werden. Eine eventuell nötige Lösung der Verbindung soll ohne besondere Umstände möglich und die Anpassung an unterschiedliche Anwendungsfälle problemlos sein.

Erfindungsgemäß wird dies dadurch erreicht, daß die freien Enden der Federschenkel derart spreizend nach außen gebogen sind, daß sie gegen die einander zugewandten Flächen zweier am Anbauteil im Abstand zueinander angeformter, parallel verlaufender Halterippen verspannbar sind, und daß an von den Federschenkeln abstehenden Federzungen jeweils eine definierte Hinterrastlinie für die vom Anbauteil abgewandte Innenkante der Öffnung im Trägerteil ausgebildet ist.

Indem die Verbindungsklammer mit ihren freien Enden nach außen spreizend an den dafür vorgesehenen Halterippen verspannt wird, werden sehr hohe Haltekräfte, also ein sicherer Sitz der Klammer und infolgedessen eine sichere Verbindung der Bauteile erreicht, ohne daß an den am Anbauteil vorzusehenden Halterippen Hinterschneidungen oder sonstige Eingriffsmöglichkeiten für die Klammer erforderlich wären. Die Herstellung der infragekommenden Anbauteile kann so mit einfachem Werkzeugaufwand, nur in Entformrichtung ohne Werkzeugschieber kostengünstig erfolgen. Die Sicherheit der Verbindung der Bauteile wird noch dadurch erhöht, daß die Verbindungsklammer mit dem Trägerteil an den definierten Hinterrastlinien nicht nur in eine kraftschlüssige, sondern auch in eine formschlüssige Verbindung gelangt.

Gemäß einer bevorzugten Ausführungsform der Erfindung weisen dazu die Federschenkel der Verbindungsklammer je eine im wesentlichen U -förmige Ausstanzung auf. Dabei bleiben, vom Mittelsteg ausgehend, Federzungen stehen, die spitzwinklig nach außen abgebogen sind und deren freie Enden im stumpfen Winkel zunächst nach innen und anschließend im stumpfen Winkel nochmals nach außen gebogen sind. Die Scheitellinie des Winkels zwischen dem ersten stumpfwinklig abgebogenen Abschnitt und dem zweiten stumpfwinklig abgebogenen Abschnitt bildet dann jeweils eine Hinterrastlinie für die vom Anbauteil abgewandte Kante der vorzugsweise schlitzförmigen Öffnung des Trägerteils, und der weiteste Abstand zwischen den beiden Federzungen ist größer als die lichte Weite der Öffnung. Wenn zur Verbindung des Anbauteils mit dem Trägerteil die Verbindungsklammer in die schlitzförmige Öffnung geschoben wird, werden die Federzungen zunächst zusammengedrückt und rasten schließlich an der Hinterrastlinie hinter der Innenkante der Öffnung ein, wodurch eine sichere form- und kraftschlüssige Verbindung hergestellt wird, die bei Bedarf dennoch problemlos wieder gelöst werden kann, indem die Federzungen zusammengedrückt werden und die Verbindungsklammer aus der Öffnung herausgezogen wird.

Vorteilhafterweise sind die Federschenkel der Verbindungsklammer so aufeinander zugebogen, daß sie im unmontierten Zustand der Verbindungsklammer ein keilförmiges Profil bilden und die Verbindungsklammer so mit Feder-Vorspannung auf eine mittig zwischen den Halterippen an dem Anbauteil angeformte Trägerrippe aufschiebbar ist. Die Trägerrippe sorgt für Stabilität und, indem sich die Federschenkel an ihr abstützen, wird die Spreizwirkung der auseinandergebogenen Enden der Federschenkel an den Halterippen unterstützt.

Diese Wirkung wird noch verstärkt, wenn an den Querkanten der U -förmigen Ausstanzungen der beiden Federschenkel aufeinander zugebogene Fortsätze ausgebildet sind, die federnd an den Seitenflächen der Trägerrippe anliegen können.

Vorzugsweise sind diese Fortsätze an den Querkanten der beiden U-förmigen Ausstanzungen im unmontierten Zustand der Verbindungsklammer ineinandergreifend ausgebildet. An den Schmalseiten der spreizend auseinandergebogenen, freien Enden der Federschenkel können Haltekrallen ausgebildet sein, die federnd an den Innenflächen der Halterippen des Anbauteils anliegen und den Sitz der Verbindungsklammer zusätzlich sichern. Die an den Fortsätzen der Querkanten in Richtung auf die Trägerrippe und an den freien Enden der Federschenkel bzw. deren Haltekrallen in Richtung auf die Halterippen wirksam werdenden Spreizkräfte verstärken sich also in vorteilhafter Weise gegenseitig.

Gemäß einer vorteilhaften Weiterbildung der Erfindung kann in die Öffnung des Trägerteils eine die Verbindungsklammer aufnehmende Verstärkungsklammer aus federndem Material eingesetzt werden. Diese Maßnahme ist besonders dann von Vorteil, wenn das Trägerteil aus einem Material mit geringerer Festigkeit, wie geschäumtem Kunststoff oder aus Schichtmaterial mit unterschiedlicher Festigkeit der Schichten hergestellt ist. Die Verstärkungsklammer gewährleistet auch in diesen Fällen eine sichere Verbindung der Bauteile.

Nach einer bevorzugten Ausführungsform weist die Verstärkungsklammer in der Seitenansicht im wesentlichen das Profil eines gleichschenkligen Dreiecks auf, das an der Grundlinie offen ist, wobei von den abgerundeten Ecken der Grundlinie ausgehend jeweils ein in seiner Höhe der Dicke des Trägerteils entsprechender Halsabschnitt und daran anschließend rechtwinklig abgehende Auflageflächen angeformt sind. Im montierten Zustand der Verstärkungsklammer liegen die Halsabschnitte unter Federspannung an den Seitenflächen der Öffnung des Trägerteils an und die Auflageflächen auf der dem Anbauteil zugewandten Fläche des Trägerteils auf, so daß ein sicherer Sitz der Verstärkungsklammer gegeben ist.

Die Stoßlinien zwischen den abgerundeten Ecken und den Halsabschnitten der Verstärkungsklammer bilden Einrastlinien einerseits für die vom Anbauteil abgewandte Kante der Öffnung im Trägerteil und andererseits für die abgewinkelten, freien Enden der Federzungen der Verbindungsklammer.

Die an dem Anbauteil angeformten Halterippen können bei der Verbindung mit dem Trägerteil an diesem bzw. an den darauf aufliegenden Auflageflächen der Verstärkungsklammer anstoßen und wirken so vorteilhaft auch als Abstandshalter zwischen Anbauteil und Trägerteil; es müssen also keine besonderen Vorsprünge oder Rippen als Abstandshalter vorgesehen werden, was fertigungstechnisch vorteilhaft ist.

Bei dem erfindungsgemäßen Klammersystem können sowohl die Halteelemente am Anbauteil als auch die Halteelemente zur Fixierung am Trägerteil unabhängig voneinander auf den jeweiligen Anwendungsfall abgestimmt werden, ohne daß der andere Haltebereich davon betroffen wird. Die Verwendungsmöglichkeit des Klammersystems ist äußerst vielseitig; es kann an gespritzten und an geschäumten Bauteilen und auch zusammen mit einer verstellbaren Kunststoffbuchse oder einer Metallbuchse eingesetzt werden. An unterschiedliche Befestigungsdicken kann die Hinterrastlinie durch entsprechende Auslegung der Höhe der Trägerrippe angepaßt werden.

Die Erfindung wird anhand der Zeichnungen beispielhaft genauer beschrieben. Es zeigen
- Fig. 1: die Seitenansicht einer bevorzugten Ausführungsform einer bei dem erfindungsgemäßen Klammersystem zur Anwendung kommenden Verbindungsklammer in unmontiertem Zustand,
- Fig. 2: die Ansicht der Verbindungsklammer gemäß Fig.1 in Richtung des Pfeiles P,
- Fig. 3: eine Schnittansicht der Verbindungsklammer gemäß der Linie III - III in Fig. 1,
- Fig. 4: einen Schnitt durch den Verbindungsbereich eines Anbauteils und eines Trägerteils mit der am Anbauteil montierten Verbindungsklammer unmittelbar vor der Verbindung mit dem Trägerteil,
- Fig. 5: einen Schnitt gemäß Fig. 4 nach der erfindungsgemäß hergestellten Verbin dung zwischen Anbauteil und Trägerteil,
- Fig. 6: einen Schnitt durch den Verbindungsbereich eines Anbauteils und eines Trägerteils mit einem montierten, nach der Erfindung weiterentwickelten Klammersystem unmittelbar vor Herstellung der Verbindung und
- Fig. 7: einen Schnitt gemäß Fig. 5 nach Herstellung der Verbindung.

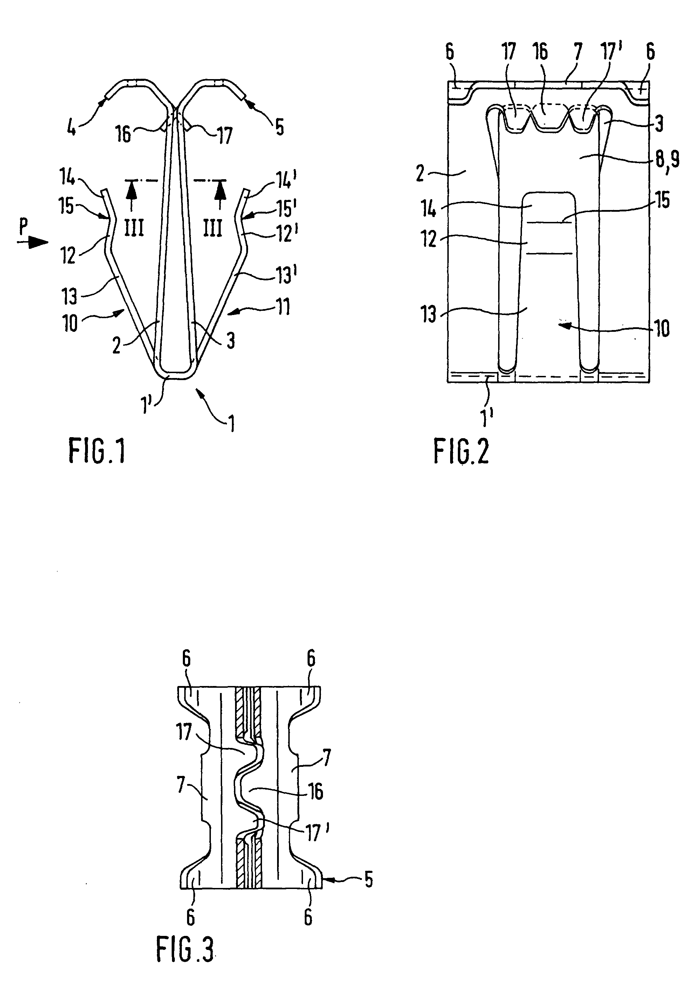

Wie aus Fig. 1 in Verbindung mit Fig. 2 erkenntlich ist, ist die Verbindungsklammer **1** des erfindungsgemäßen Klammersystems aus einem ursprünglich rechteckigen Stück Federstahl gefertigt, wobei unter Belassung eines schmalen Mittelstegs **1'** zwei Federschenkel **2** und **3** so aufeinander zurückgebogen sind, daß sie in der Seitenansicht gemäß Fig. 1 ein keilförmiges Profil bilden. Die freien Enden der Federschenkel **2** und **3,** die sich am spitzen Winkel des Profils zumindest nahezu berühren, sind von dieser Berührungslinie aus um jeweils etwa 45° in Bezug auf die Mittellinie nach außen und danach im Abstand zunächst horizontal um etwa 45° abund ein weiteres Mal um etwa 45° zurückgebogen. Die so zurückgebogenen Schmalkanten **4** und **5** der Federschenkel **2** und **3** sind vorzugsweise krallenförmig ausgestanzt. Wie Fig. 3 als Schnittansicht entlang der Schnittlinie A -A in Fig. 1 erkennen läßt, bleiben in der dargestellten Ausführungsform der Verbindungsklammer **1** durch die Ausstanzung an den Schmalkanten **4** und **5** jeweils zwei seitliche Haltekrallen **6** und in der Mitte ein schmaler Versteifungsbereich **7** stehen.

Im Abstand zum Mittelsteg **1'** der Verbindungsklammer **1** weisen beide Federschenkel **2** und **3** eine im wesentlichen U -förmige Ausstanzung **8** und **9** auf, durch die jeweils eine vom Mittelsteg **1'** abragende Federzunge **10** und **11** stehen bleibt. Beide Federzungen **10** und **11** sind symmetrisch zur Mittellinie spitzwinklig, in der dargestellten Ausführungsform um etwa 25°, abgespreizt. Die freien Enden der Federzungen **10** und **11** sind wiederum symmetrisch zunächst nach innen und dann im Abstand nochmals nach außen abgewinkelt. Der erste abgewinkelte Abschnitt **12** bzw. **12'** bildet mit dem Hauptabschnitt **13** bzw.**13'** der jeweiligen Federzunge **10, 11** einen stumpfen Winkel von vorzugsweise 145° und mit dem zweiten abgewinkelten Abschnitt **14** bzw. **14'** ebenfalls einen stumpfen Winkel von vorzugsweise 150°. Die Scheitellinie **15** bzw. **15'** zwischen den beiden abgewinkelten Abschnitten **12** und **14** bzw. **12'** und **14'** der Federzungen **10** und **11** bilden beim erfindungsgemäßen Einsatz der Verbindungsklammer **1** eine Hinterrastlinie für die Verbindung.

Die Querkanten der U -förmigen Ausstanzungen **8** und **9** der beiden Federschenkel **2** und **3** weisen im unmontierten Zustand der Verbindungsklammer **1** ineinandergreifende Fortsätze **16, 17, 17'** auf. Bei der dargestellten Ausführungsform sind die Seitenkanten der Ausstanzung **9** in dem einen Federschenkel **3** geradlinig ausgebildet und an der Querkante ist ein mittiger Fortsatz **16** vorgesehen. Die Querkante der Ausstanzung **8** in dem anderen Federschenkel **2** weist zwei seitliche Fortsätze **17, 17'** auf, wozu die Seitenkanten der U -förmigen Ausstanzung **8** im unteren Bereich leicht ausgestellt sind. Zwischen sich belassen die zwei seitlichen Fortsätze **17, 17'** eine dem mittigen Fortsatz **16** entsprechende Ausnehmung, und die Fortsätze **16, 17, 17'** sind, wie in der Seitenansicht gemäß Fig. 1 und in der Schnittansicht gemäß Fig. 3 deutlich zu erkennen ist, krallenartig ineinandergebogen.

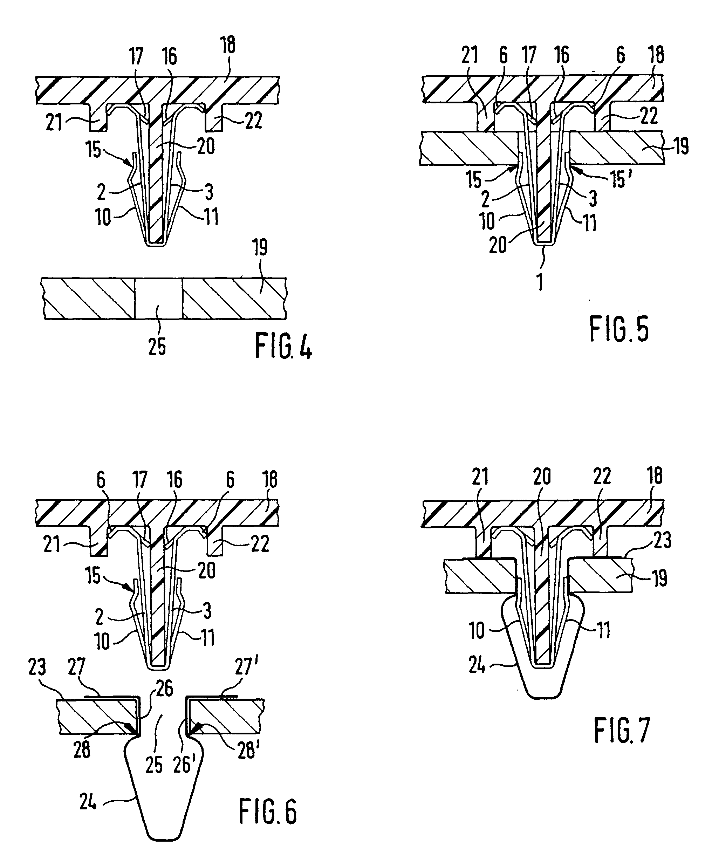

Fig. 4 zeigt in einem Ausschnitt die Verbindungsklammer **1** montiert auf einem Anbauteil **18,** das mit einem Trägerteil **19** verbunden werden soll. Das Anbauteil **18** und / oder das Trägerteil **19** können beispielsweise aus Kunststoff im Spritzgießverfahren hergestellt sein. An der dem Trägerteil **19** zugewandten Seite des Anbauteils **18** sind in einem Abstand zueinander parallel verlaufende Halterippen **21, 22** angeformt, zwischen denen die Verbindungsklammer **1** mit ihren nach außen gebogenen freien Enden verspannt wird. In der dargestellten bevorzugten Ausführungsform der Erfindung ist außerdem eine zu den Halterippen **21, 22** mittig verlaufende Trägerrippe **20** angeformt; sie ist deutlich höher als die beiden Halterippen **21, 22,** verleiht Stabilität und dient außerdem, wie noch deutlich wird, der Verstärkung der Spannwirkung.

Die Verbindungsklammer **1** wird auf die Trägerrippe **20** aufgeschoben, was durch die nach außen umgebogenen freien Enden der Federschenkel **2** und **3** in an sich bekannter Weise erleichtert wird. Beim Aufschieben der Verbindungsklammer **1** auf die Trägerrippe **20** werden die Federschenkel **2** und **3** auseinandergespreizt und es legen sich die zuvor ineinandergreifenden, krallenartigen Fortsätze **16**, **17**, **17'** an den Querkanten der U -förmigen Ausstanzungen **8, 9** der Federschenkel **2** und **3** unter Federspannung an die Seitenflächen der Trägerrippe **20.** Der Abstand zwischen den Halterippen **21, 22** und der Trägerrippe **20** ist so bemessen, daß sich beim weiteren Aufschieben der Verbindungsklammer **1** die an den umgebogenen, freien Enden der Federschenkel **2** und **3** ausgebildeten Haltekrallen **6** schließlich federnd gegen die inneren Seitenflächen der Halterippen **21, 22** legen. Somit wird die Verbindungsklammer **1** sowohl durch die nach innen gerichteten und mit Vorspannung an den Seitenflächen der Trägerrippe **20** anliegenden krallenartigen Fortsätze **16, 17, 17'** als auch die nach außen gebogenen und ebenfalls mit Vorspannung an den inneren Seitenflächen der Halterippen **21, 22** anliegenden Haltekrallen **6** durch deren Spreizwirkung sicher gehalten; die entgegengesetzt gerichteten krallenartigen Fortsätze **16, 17, 17'** und Haltekrallen **6** verstärken sich dabei vorteilhafterweise in ihrer Wirkung, und es werden vor allem infolge der nach außen gerichteten Verspannung sehr hohe Haltekräfte erreicht. Es sind keine besonderen Eingriffsmaßnahmen, wie beispielsweise Hinterschneidungen an den Seitenflächen der Trägerrippe **20** oder Halterippen **21, 22,** für die Haltekrallen **6** oder krallenartigen Fortsätze **16, 17, 17'** erforderlich, was eine kostengünstige Herstellung des Anbauteils **18** mit einfachen Funktionen im Spritzgießwerkzeug erlaubt. Die an ihm benötigten Rippen sind mit einfachem Werkzeugaufwand in der gleichen Entformrichtung herstellbar.

Zur Verbindung des Anbauteils **18** mit dem Trägerteil **19** wird die Trägerrippe **20** mit der gemäß Fig. 4 montierten Verbindungsklammer **1** in eine entsprechend dimensionierte, schlitzförmige Öffnung **25** des Trägerteils **19** eingesteckt, wobei die an der Verbindungsklammer **1** seitlich im Winkel abstehenden Federzungen **10** und **11** an der Wand der Öffnung **25** zusammengedrückt werden und die Innenkanten der Öffnung **25** schließlich gemäß Fig. 5 an den Scheitellinien bzw. Hinterrastlinien **15, 15'** der abgewinkelten Abschnitte **12, 12'** und **14**, **14'** der Enden der Federzungen **10** und **11** einrasten, womit die Verbindung hergestellt ist. Die Länge der schlitzförmigen Öffnung **25** ist vorteilhafterweise so bemessen, daß, insbesondere wenn mehrere Verbindungsstellen vorgesehen sind, ein Toleranzausgleich erfolgen kann. Die Halterippen **21, 22** kommen dabei am Trägerteil **19** zur Anlage und wirken so zugleich als Abstandshalter zwischen dem Trägerteil **19** und dem Anbauteil **18.**

Erforderlichenfalls kann die Verbindung auf einfache Weise wieder gelöst werden, indem die Federzungen **10** und **11** zusammengedrückt werden und die Verbindungsklammer **1** durch die Öffnung **25** zurückgeschoben wird.

Fig. 6 und 7 zeigen eine Weiterentwicklung der Erfindung vor und nach vollzogener Verbindung eines Anbauteils **18** mit einem Trägerteil **19,** die sich besonders für Anwendungsfälle eignet, die eine Verstärkung an der Verbindungsstelle ratsam oder erforderlich machen, z. B. wenn das Trägerteil **19** aus einem geschäumten Kunststoff oder aus Schichtmaterial mit unterschiedlichen Festigkeiten besteht.

Es kommt dabei eine wie schon beschrieben ausgebildete Verbindungsklammer **1** zur Anwendung, die auch in derselben Weise am Anbauteil **18** montiert ist. Das Trägerteil **19** kann mit einer Schicht, z. B. einer Folie **23** überzogen sein. In seine schlitzförmige Öffnung **25** wird eine Verstärkungsklammer **24** eingesetzt, die in der Seitenansicht die Form eines von dem Trägerteil **19** abragenden, gleichschenkligen Dreiecks mit abgeflachter Spitze und abgerundeten Ecken aufweist.

Das Dreieck ist an seiner Grundseite offen und an die abgerundeten Ecken schließt sich jeweils ein Halsabschnitt **26, 26'** an, dessen Höhe der Dicke des Trägerteils **19** entspricht. Von jedem Halsabschnitt **26, 26'** geht rechtwinklig noch eine Auflagefläche **27, 27'** ab, die im eingesetzten Zustand der Verstärkungsklammer **24** auf der dem Anbauteil **18** zugewandten Fläche des Trägerteils **19** aufliegt. Die vom Anbauteil **18** abgewandte Innenkante der Öffnung **25** des Trägerteils **19** wird von den abgerundeten Ecken des Dreieckprofils der Verstärkungsklammer **24** hintergriffen, wobei die Stoßlinien zwischen den abgerundeten Ecken und den abragenden Halsabschnitten **26, 26'** exakte Einrastlinien **28, 28'** für die Innenkante der Öffnung **25** bilden. Die Verstärkungsklammer **24** ist vorzugsweise aus Federstahl gefertigt und so dimensioniert, daß sie durch Federspannung an ihrem Platz und in Eingriff mit den Kanten der schlitzförmigen Öffnung **25** gehalten wird. Das von der Verstärkungsklammer **24** umschlossene Dreieck ist weiter als das von den Federzungen **10** und **11** der Verbindungsklammer **1** definierte Profil und der Abstand zwischen seiner abgeflachten Spitze und den Einrastlinien **28, 28'** ist größer als der Abstand vom Mittelsteg **1'** der Verbindungsklammer **1** und den Hinterrastlinien **15, 15'** der Federzungen **10** und **11,** so daß die Verbindungsklammer **1** von der Verstärkungsklammer **24** aufgenommen werden kann.

Zur Befestigung des Anbauteils **18** an dem Trägerteil **19** wird gemäß dieser Weiterbildung zunächst die Verstärkungsklammer **24** in die Öffnung **25** des Trägerteils **19** eingesetzt und danach das Anbauteil **18** angebracht, indem die an ihm, wie oben beschrieben, montierte Verbindungsklammer **1** in die zum Anbauteil **18** hin offene Verstärkungsklammer **24** und damit in die Öffnung **25** eingeschoben wird, bis die Federzungen **10** und **11** der Verbindungsklammer **1** mit ihren Hinterrastlinien **15, 15'** an den Stoßlinien **28, 28'** der Verstärkungklammer **24** einrasten und so die Verbindung hergestellt ist.

Die Verstärkungsklammer **24** garantiert auch bei einem Trägerteil **19** aus einem Material geringerer Festigkeit oder Steifigkeit, wie beispielsweise geschäumtem Kunststoff, einen sicheren Sitz der Verbindungsklammer **1** und somit eine sichere Verbindung der Bauteile.

## Patentansprüche

1. Klammersystem zur Befestigung eines Anbauteils an einem Trägerteil, bestehend aus einer Verbindungsklammer **(1)** aus federndem Material, einem Anbauteil **(18)** und einem Trägerteil **(19)** mit einer Öffnung **(25),** wobei die Verbindungsklammer **(1)** im unmontierten Zustand zwei von einem Mittelsteg **(1')** aus aufeinander zugebogene Federschenkel **(2, 3)** aufweist, an einem Fortsatz **(20)** des Anbauteils **(18)** festklemmbar und in die vorzugsweise schlitzförmige Öffnung **(25)** des Trägerteils **(19)** einsteckbar ist und sich dabei derart federnd verformt, daß sie an den Kanten dieser Öffnung **(25)** mit dem Trägerteil **(19)** in eine kraftschlüssige Verbindung gelangt, **dadurch gekennzeichnet, daß** die freien Enden der Federschenkel derart spreizend nach außen gebogen sind, daß sie gegen die einander zugewandten Flächen zweier am Anbauteil **(18)** im Abstand zueinander angeformter, parallel verlaufender Halterippen **(21, 22)** verspannbar sind, und daß an von den Federschenkeln **(2, 3)** abstehenden Federzungen **(10, 11)** jeweils eine definierte Hinterrastlinie **(15, 15')** für die vom Anbauteil **(18)** abgewandte Innenkante der Öffnung **(25)** im Trägerteil **(19)** ausgebildet ist.

2. Klammersystem nach Anspruch 1, **dadurch gekennzeichnet, daß** die Federschenkel **(2, 3)** der Verbindungsklammer **(1)** je eine im wesentlichen U -förmige Ausstanzung **(8, 9)** aufweisen und die dabei, vom Mittelsteg **(1')** ausgehend, stehenbleibenden Federzungen **(10, 11)** nach außen spitzwinklig abgebogen sind und deren freie Enden im stumpfen Winkel zunächst nach innen und anschließend im stumpfen Winkel nochmals nach außen gebogen sind, wobei die Scheitellinie des Winkels zwischen dem ersten stumpfwinklig abgebogenen Abschnitt **(12, 12')** und dem zweiten stumpfwinklig abgebogenen Abschnitt **(14,14')** jeweils eine Hinterrastlinie **(15, 15')** für die vom Anbauteil **(18)** abgewandte Kante der Öffnung **(25)** des Trägerteils **(19)** bildet und der weiteste Abstand zwischen den beiden Federzungen **(10** und **11)** größer ist als die lichte Weite der Öffnung **(25)** im Trägerteil **(19).**

3. Klammersystem nach einem der vorangehenden Ansprüche, **dadurch gekennzeichnet, daß** die Federschenkel **(2, 3)** so aufeinander zugebogen sind, daß sie im unmontierten Zustand der Verbindungsklammer **(1)** ein keilförmiges Profil bilden und die Verbindungsklammer **(1)** so mit Feder-Vorspannung auf eine mittig zwischen den Halterippen **(21, 22)** an dem Anbauteil **(18)** angeformte Trägerrippe **(20)** aufschiebbar ist.

4. Klammersystem nach einem der Ansprüche 2 oder 3, **dadurch gekennzeichnet, daß** an den Querkanten der U -förmigen Ausstanzungen **(8, 9)** der beiden Federschenkel **(2, 3)** aufeinander zugebogene Fortsätze **(16, 17, 17')** ausgebildet sind, die federnd an den Seitenflächen der Trägerrippe **(20)** anliegen.

5. Klammersystem nach Anspruch 4, **dadurch gekennzeichnet, daß** die Fortsätze **(16, 17, 17')** an den Querkanten der beiden U-förmigen Ausstanzungen **(8, 9)** im unmontierten Zustand der Verbindungsklammer **(1)** ineinandergreifend ausgebildet sind.

6. Klammersystem nach einem der vorangehenden Ansprüche, **dadurch gekennzeichnet, daß** an den Schmalseiten **(4, 5)** der spreizend auseinandergebogenen, freien Enden der Federschenkel **(2, 3)** Haltekrallen **(6)** ausgebildet sind, die federnd an den Innenflächen der Halterippen **(21, 22)** des Anbauteils **(18)** anliegen.

7. Klammersystem nach einem der vorangehenden Ansprüche, **dadurch gekennzeichnet, daß** in die Öffnung **(25)** des Trägerteils **(19)** eine die Verbindungsklammer **(1)** aufnehmende Verstärkungsklammer **(24)** aus federndem Material einsetzbar ist.

8. Klammersystem nach Anspruch 7, **dadurch gekennzeichnet, daß** die Verstärkungsklammer **(24)** in der Seitenansicht im wesentlichen das Profil eines gleichschenkligen Dreiecks hat, das an der Grundlinie offen ist, wobei von den abgerundeten Ecken der Grundlinie ausgehend jeweils ein in seiner Höhe der Dicke des Trägerteils **(19)** entsprechender Halsabschnitt **(26, 26')** und daran anschließend rechtwinklig abgehende Auflageflächen **(27, 27')** angeformt sind.

9. Klammersystem nach Anspruch 8, **dadurch gekennzeichnet, daß** im montierten Zustand der Verstärkungsklammer **(24)** die Halsabschnitte **(26, 26')** unter Federspannung an den Seitenflächen der Öffnung **(25)** des Trägerteils **(19)** anliegen und die Auflageflächen **(27, 27')** auf der dem Anbauteil **(18)** zugewandten Fläche des Trägerteils **(19)** aufliegen.

10. Klammersystem nach Anspruch 8 oder 9, **dadurch gekennzeichnet, daß** die Stoßlinien zwischen den abgerundeten Ecken und den Halsabschnitten **(26, 26')** der Verstärkungsklammer **(24)** Einrastlinien **(28, 28')** einerseits für die vom Anbauteil **(18)** abgewandte Kante der Öffnung **(25)** im Trägerteil **(19)** und andererseits für die abgewinkelten, freien Enden der Federzungen **(10, 11)** der Verbindungsklammer **(1)** bilden.

11. Klammersystem nach einem der vorangehenden Ansprüche **dadurch gekennzeichnet, daß** die an dem Anbauteil **(18)** angeformten Halterippen **(21, 22)** bei der Verbindung mit dem Trägerteil **(19)** an diesem bzw. an den darauf aufliegenden Auflageflächen **(27, 27')** der Verstärkungsklammer **(24)** anstoßen.

## Claims

1. A clip system for fixing an attachment portion to a carrier portion, comprising a connecting clip (1) of resilient material, an attachment portion (18) and a carrier portion (19) having an opening (25), wherein the connecting clip (1) in the unmounted condition has two spring legs (2, 3) which are bent towards each other from a central web (1'), can be clamped fast to a projection (20) of the attachment portion (18) and can be inserted into the preferably slot-shaped opening (25) in the carrier portion (19) and in so doing is resiliently deformed in such a way that it comes into force-locking relationship with the carrier portion (19) at the edges of said opening (25), **characterised in that** the free ends of the spring legs are bent in an outwardly spreading configuration in such a way that they can be braced against the mutually facing surfaces of two holding ribs (21, 22) which are formed on the attachment portion (18) at a spacing relative to each other and which extend parallel, and that provided on spring tongues (10, 11) projecting from the spring legs (2, 3) is a respective defined retaining latching line (15, 15') for the inner edge, which faces away from the attachment portion (18), of the opening (25) in the carrier portion (19).

2. A clip system according to claim 1 **characterised in that** the spring legs (2, 3) of the connecting clip (1) each have a substantially U-shaped stamped-out opening (8, 9) and the spring tongues (10, 11) which remain **in that** case, extending from the central web (1'), are bent outwardly at an acute angle and the free ends thereof are firstly bent inwardly at an obtuse angle and then again bent outwardly at an obtuse angle, wherein the apex line of the angle between the first portion (12, 12') which is bent at an obtuse angle and the second portion (14, 14') which is bent at an obtuse angle forms a respective retaining latching line (15, 15') for the edge, which is remote from the attachment portion (18), of the opening in the carrier portion (19) and the widest spacing between the two spring tongues (10 and 11) is greater than the internal width of the opening (25) in the carrier portion (19).

3. A clip system according to one of the preceding claims **characterised in that** the spring legs (2, 3) are bent towards each other in such a way that in the unmounted condition of the connecting clip (1) they form a wedge-shaped profile and the connecting clip (1) can **in that** way be pushed with spring biasing on to a carrier rib (20) formed on the attachment portion (18) centrally between the holding ribs (21, 22).

4. A clip system according to one of claims 2 and 3 **characterised in that** provided at the transverse edges of the U-shaped stamped-out openings (8, 9) in the two spring legs (2, 3) are projections (16, 17, 17') which are bent towards each other and which bear resiliently against the side faces of the carrier rib (20).

5. A clip system according to claim 4 **characterised in that** the projections (16, 17, 17') on the transverse edges of the two U-shaped stamped-out openings (8, 9) are adapted to engage into each other in the unmounted condition of the connecting clip (1).

6. A clip system according to one of the preceding claims **characterised in that** provided at the narrow sides (4, 5) of the free ends, which are bent away from each other in spreading relationship, of the spring legs (2, 3) are holding claws (6) which bear resiliently against the inside surfaces of the holding ribs (21, 22) of the attachment portion (18).

7. A clip system according to one of the preceding claims **characterised in that** a reinforcing clip (24) of resilient material, which accommodates the connecting clip (1), can be fitted into the opening (25) in the carrier portion (19).

8. A clip system according to claim 7 **characterised in that** in side view the reinforcing clip (24) is substantially of the profile of an isosceles triangle which is open at the base line, wherein starting from the rounded comers of the base line formed thereon are respectively a neck portion (26, 26') corresponding in its height to the thickness of the carrier portion (19) and adjoining same support surfaces (27, 27') which extend away at a right angle.

9. A clip system according to claim 8 **characterised in that** in the mounted condition of the reinforcing clip (24) the neck portions (26, 26') bear under a spring stress against the side surfaces of the opening (25) in the carrier portion (19) and the support surfaces (27, 27') rest on the surface of the carrier portion (19), which faces towards the attachment portion (18).

10. A clip system according to claim 8 or claim 9 **characterised in that** the junction lines between the rounded comers and the neck portions (26, 26') of the reinforcing slip (24) form engagement latching lines (28, 28') on the one hand for the edge, which is remote from the attachment portion (18) of the opening (25) in the carrier portion (19) and on the other hand for the angled free ends of the spring tongues (10, 11) of the connecting clip (1).

11. A clip system according to one of the preceding claims **characterised in that** the holding ribs (21, 22) formed on the attachment portion (18) upon being connected to the carrier portion (19) bear against the latter or against the support surfaces (27, 27') of the reinforcing clip (24), which rest on the carrier portion.

## Revendications

1. Système d'agrafe pour la fixation d'une pièce rapportée sur un élément support, se composant d'une agrafe de liaison (1) réalisée dans un matériau capable de se comporter de manière élastique, d'une pièce rapportée (18) et d'un élément support (19) comportant une ouverture (25), l'agrafe de liaison, qui présente, à l'état non montée, deux pattes élastiques (2, 3) repliées l'une vers l'autre en partant d'une barrette entretoise intermédiaire (1'), étant en l'occurrence destinée à être bloquée en position sur un prolongement (20) de la pièce rapportée (18) et à être insérée dans l'ouverture (25) de l'élément support (19), réalisée de préférence sous la forme d'une fente, et se déformant ce faisant de manière élastique dans des conditions telles qu'elle vient constituer, au niveau des bords de cette ouverture (25), une liaison d'assemblage par l'action inhérente à la force exercée, **caractérisée en ce que** les extrémités libres des pattes élastiques sont repliées en s'écartant vers l'extérieur dans une proportion telle qu'elles sont susceptibles d'être bridées en position contre les faces orientées l'une vers l'autre de deux nervures de retenue (21, 22) à disposition parallèle, réalisées solidaires par formage de la pièce rapportée (18) à une certaine distance l'une de l'autre et **en ce qu'**au niveau des languettes élastiques (10, 11) s'écartant des pattes élastiques (2, 3), une ligne matérialisée (15, 15') pour venue en prise d'encastrement par derrière au niveau des bords intérieurs opposés de l'ouverture (25) ménagée dans l'élément support (19) est respectivement prévue.

2. Système d'agrafe selon la revendication 1, **caractérisé en ce que** les pattes élastiques (2, 3) de l'agrafe de liaison (1) comportent respectivement une découpe sensiblement en forme de U réalisée par poinçonnage (8, 9) et **en ce que** les languettes élastiques (10, 11) en l'occurrence immobilisées, partant de la barrette entretoise intermédiaire (1'), sont repliées vers l'extérieur en formant un angle aigu et **en ce que** leurs extrémités libres sont repliées tout d'abord vers l'intérieur en formant un angle obtus, puis une nouvelles fois vers l'extérieur en formant un angle obtus, la ligne correspondant au sommet de l'angle définissant en l'occurrence entre la première portion repliée sous un angle obtus (12, 12') et la deuxième portion repliée sous un angle obtus (14, 14') respectivement une ligne de cramponnage par derrière du bord, orienté à l'opposé de la pièce rapportée (18), de l'ouverture (25) de l'élément support (19) et **en ce que** l'intervalle d'écartement maximum entre les deux languettes élastiques (10 et 11) est plus grand que le gabarit de passage libre de l'ouverture (25) de l'élément support (19).

3. Système d'agrafe selon l'une des revendications qui précèdent, **caractérisé en ce que** les pattes élastiques (2, 3) sont rapprochées par cintrage dans une proportion telle qu'à l'état non monté de l'agrafe de liaison (1) elles définissent un profil cunéiforme et **en ce que** l'agrafe de liaison (1) est ainsi susceptible d'être poussée, avec une précontrainte élastique, sur une nervure de support (20) réalisée solidaire par formage de la pièce rapportée (18) dans une position centrale équidistance des nervures de retenue (21, 22).

4. Système d'agrafe selon l'une des revendications 2 ou 3, **caractérisé en ce qu'**au niveau des bords transversaux des découpes en forme de U réalisées par poinçonnage (8, 9) dans les deux pattes élastiques (2, 3), des prolongements (16, 17, 17') rapprochés par cintrage sont formés, qui viennent en contact d'appui en se comportant de manière élastique avec les faces latérales de la nervure de support (20).

5. Système d'agrafe selon la revendication 4, **caractérisé en ce que** les prolongements (16, 17, 17') formés au niveau des bords transversaux des deux découpes en forme de U réalisées par poinçonnage (8, 9) viennent respectivement s'imbriquer l'un dans l'autre à l'état non monté de l'agrafe de liaison (1).

6. Système d'agrafe selon l'une quelconque des revendications qui précèdent, **caractérisé en ce qu'**au niveau des petits côtés (4, 5) des extrémités libres, allant en s'écartant l'une de l'autre, des pattes élastiques (2, 3) des crampons de retenue (6) sont formés, qui viennent, avec la possibilité de réagir de manière élastique, en contact d'appui sur les faces intérieures des nervures de retenue (21, 22) de la pièce rapportée (18).

7. Système d'agrafe selon l'une quelconque des revendications qui précèdent, **caractérisé en ce qu'**une agrafe de renforcement (24) réalisée dans une matière capable de se déformer par effet élastique, épousant la configuration de l'agrafe de liaison (1), est susceptible d'être insérée dans l'ouverture (25) de l'élément support (19).

8. Système d'agrafe selon la revendication 7, **caractérisé en ce que** l'agrafe de renforcement (24) a, vue de côté, sensiblement le profil d'un triangle isocèle, qui est ouvert au niveau de sa base, une portion formant gorge (26, 26'), partant des angles arrondis de la ligne de base, dont la hauteur correspond à l'épaisseur de l'élément support (19), et des faces d'application attenantes, s'écartant suivant une orientation en angle droit (27, 27'), étant en l'occurrence respectivement réalisées solidaires par formage.

9. Système d'agrafe selon la revendication 8, **caractérisé en ce qu'**à l'état monté de l'agrafe de renforcement (24), les portions formant gorge (26, 26') sont appliquées en contact d'appui contre les faces latérales de l'ouverture (25) de l'élément support (19) en exerçant une force résultant de son élasticité et **en ce que** les faces d'application (27, 27') prennent appui sur la face de l'élément support (19) faisant face à la pièce rapportée (18).

10. Système d'agrafe selon les revendications 8 ou 9, **caractérisé en ce que** les lignes de rencontre entre les angles arrondis et les portions formant gorge (26, 26') de l'agrafe de renforcement (24) définissent des lignes d'encastrement (28, 28') entre d'une part le bord opposé à la pièce rapportée (18) de l'ouverture (25) ménagée dans l'élément support (19) et d'autre part les extrémités libres repliées en angle droit des languettes élastiques (10, 11) de l'agrafe de liaison (1).

11. Système d'agrafe selon l'une quelconque des revendications qui précèdent, **caractérisé en ce que** les nervures de retenue (21, 22) réalisées solidaires par formage de la pièce rapportée (18) viennent, lors de l'assemblage de cette dernière avec l'élément support (19), en contact avec celui-ci ou avec les surfaces d'application (27, 27') de l'agrafe de renforcement (24) en position sur celui-ci.
